# FASCICULE DE BREVET EUROPEEN

(11) **EP 1 493 358 B1**
(45) Date de publication et mention de la délivrance du brevet: **22.11.2006**
(21) Numéro de dépôt: 04291388.9
(22) Date de dépôt: 04.06.2004
(51) Int. Cl.: A47C 7/62, A47C 4/52

(54) **Système de rangement pour siège escamotable**
Speichersystem eines zusammenklappbaren Stuhls
Storage system for a foldable chair

(30) Priorité: 02.07.2003 FR 0308013
(43) Date de publication de la demande: 05.01.2005
(73) Titulaire: Peugeot Citroën Automobiles S.A., 78140 Vélizy Villacoublay (FR)
(72) Inventeur: Le Dall, Christophe, 92150 Suresnes (FR); Gregoire, Gérard, 69006 Lyon (FR)
(74) Mandataire: Fernandez, Francis Lionel

(56) Documents cités:
- DE-C- 19 749 304
- GB-A- 2 231 787
- US-A- 3 048 855
- US-A- 3 419 309
- US-A- 5 098 153

## Description

L'invention se rapporte à un système de rangement pour siège escamotable comme révélé dans US 5098153 A et plus particulièrement un tel système destiné à être utilisé dans un véhicule automobile.

Les constructeurs automobiles tendent à améliorer la modularité de leurs véhicules. Ils proposent ainsi des sièges pouvant imprimer de plus en plus de mouvements afin d'augmenter le volume intérieur utile et/ou le nombre de places assises. Pour y arriver, il est connu d'utiliser soit des sièges de faibles épaisseurs qui s'escamotent dans le coffre pour offrir une troisième rangée de sièges inconfortables, soit des sièges d'épaisseurs normales qui se plient dans l'habitacle monopolisant du volume intérieur utile.

Le but de la présente invention est de pallier tout ou partie les inconvénients cités précédemment en offrant un système de rangement pour siège escamotable permettant d'offrir plus de modularité du volume intérieur utile.

A cet effet, l'invention se rapporte à un système de rangement pour siège escamotable comprenant au moins un siège monté sur pivot dont le dossier se replie sur l'assise pour lui permettre d'imprimer un mouvement de rotation jusque dans un évidement de rangement caractérisé en ce qu'il comporte au moins un dispositif de recouvrement dudit évidemment de rangement permettant d'obtenir une surface sensiblement plane.

Conformément à d'autres caractéristiques avantageuses de l'invention :
- ledit au moins un dispositif de recouvrement comporte des moyens coulissants qui s'escamotent pour sélectivement permettre la mise en place dudit au moins un siège ;
- lesdits moyens coulissants comportent un tapis qui coulisse à l'intérieur de deux glissières ;
- ledit tapis est du type à lamelles ;
- le système comporte un dispositif de recouvrement pour chaque siège escamotable ;
- le système comporte deux sièges escamotables et deux dispositifs de recouvrement sensiblement juxtaposés permettant de sélectivement déplier un siège ou les deux pour transformer respectivement un ou deux desdits évidements en volume supplémentaire de rangement ;
- le système comporte, de plus, une traverse qui comprend une glissière de chacun desdits deux dispositifs de recouvrement permettant ainsi de les lier et de rigidifier ledit système de rangement afin qu'il supporte de plus lourdes charges ;
- ladite traverse est amovible pour offrir, lorsque les moyens coulissants sont escamotés et les sièges dépliés, un volume supplémentaire de rangement unique ;
- chaque siège peut glisser le long du pivot pour permettre au moins deux positionnements différents dudit siège quand il est déplié.

L'invention se rapporte également à un véhicule automobile caractérisé en ce qu'il comporte au moins un système de rangement selon une des configurations précédentes.

D'autres particularités et avantages ressortiront clairement de la description qui en est faite ci-après, à titre indicatif et nullement limitatif, en référence aux dessins annexés, dans lesquelles :
- la figure 1 est une vue schématique du système de rangement lors du dépliage d'un des sièges escamotables ;
- la figure 2 comporte quatre vues schématiques de l'escamotage d'un des sièges ;
- le figure 3 est une vue schématique partielle du système de rangement ;
- la figure 4 est une vue schématique du système de rangement quand le dispositif de recouvrement est entièrement déployé ;

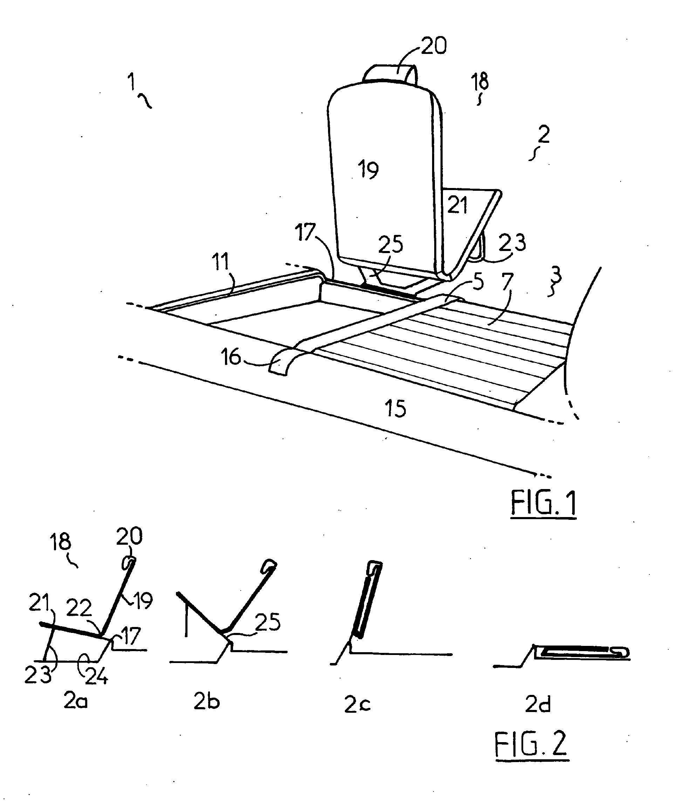

Comme illustré dans l'exemple de la figure 1, le système de rangement est généralement référencé 1. Il comporte un dispositif de sièges escamotables 2 et un dispositif de recouvrement 3.

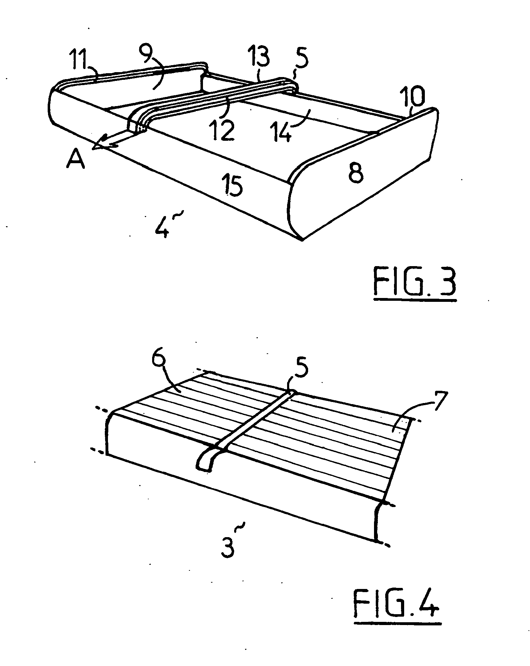

Comme illustré dans l'exemple des figures 3 et 4, le dispositif de recouvrement 3 comporte un cadre 4, une traverse 5 et deux tapis 6 et 7.

Le cadre 4 est sensiblement de forme parallélépipédique dont la surface supérieure est ouverte, formant ainsi un volume creusé vers le bas. Les petits côtés 8 et 9 de la base rectangulaire comportent chacun une rainure 10 et 11. Chacune de ces rainures fait face avec une des rainures 12 et 13 située sur la traverse amovible 5. Ces deux paires de rainures 10, 12 et 11, 13 sont utilisées respectivement comme glissières pour les tapis 7 et 6. Ainsi l'utilisateur du système de rangement 1 peut sélectivement escamoter ou déployer chaque tapis 6 et 7 indépendamment l'un de l'autre.

Préférentiellement, le cadre 4 comprend deux grands côtés 14 et 15 de la base rectangulaire qui sont sensiblement moins hauts que les petits côtés 8 et 9 de manière à ce que les hauteurs de glissières 10 et 11 des tapis 7 et 6 soient compensées pour fermer sensiblement entièrement ledit parallélépipède 4 lorsque les tapis 6 et 7 sont déployés comme illustré à la figure 4.

Sensiblement sur le plan médian de la longueur du parallélépipède 4 se trouve la traverse 5. Elle fait saillie par rapport aux grands côtés 14, 15 de manière à ce que ses glissières 12 et 13 soient en vis-à-vis avec respectivement les glissières 10 et 11. Préférentiellement, cette traverse 5 est amovible et coopère avec le cadre 4 au moyen de deux doigts (non représentés) de forme sensiblement trapézoïdale situés à chacune de ses extrémités. Cette forme trapézoïdale coopère avec une forme correspondante sur le cadre 4 et permet de sélectivement enlever, par la translation A (cf. figure 3), la traverse 5 du cadre 4 tout en interdisant d'autre mouvement. Bien évidemment, cette opération peut être réalisée uniquement lorsque les deux tapis 6 et 7 ont été préalablement rétractés.

Préférentiellement, un loquet 16 (cf. figure 1) permet de bloquer en translation ladite traverse lorsqu'elle est en position sur le cadre 4. Ce système de traverse amovible permet d'offrir, lorsque les sièges 18 sont dépliés, un volume de rangement supplémentaire non compartimenté pour, par exemple, des objets à la fois larges et hauts.

Les tapis 6 et 7 sont préférentiellement du type à lamelles ce qui permet de rigidifier la surface de recouvrement de façon uniforme et de faciliter leur déplacement dans les glissières 10, 11, 12 et 13 qui ne sont pas entièrement rectilignes. Lors de leur escamotage, les tapis 6 et 7 coulissent sensiblement sous le cadre 4 pour minimiser leur encombrement.

Dans l'exemple illustré à la figure 1, le dispositif de sièges escamotables 2 comporte un pivot 17 qui, monté sensiblement adjacent le long du grand côté 14 du cadre 4, supporte deux sièges 18.

Ces sièges 18 comportent chacun un dossier 19 muni d'un appui-tête 20 et une assise 21. Le dossier 19 coopère avec l'assise 21 au moyen d'une articulation 22 à deux positions. Dans la première position comme illustrée sur les figures 2a et 2b, l'articulation 22 permet de réaliser un angle entre l'assise 21 et le dossier 19 sensiblement compris entre 90 et 120 degrés. Dans la seconde position comme illustré sur les figures 2c et 2b, l'articulation 22 permet au dossier 19 de se replier sensiblement contre l'assise 21.

L'assise 21 comporte également une pièce tubulaire 23 sensiblement en U montée pivotante sous l'assise 21. Elle peut sélectivement entièrement s'insérer dans l'assise 21 lorsque le siège 18 est escamoté dans le cadre 4 et ainsi permettre de fermer les tapis 6 et 7 ou faire saillie de l'assise 21 pour relier le siège 18 au plancher 24 du véhicule lorsque le siège 18 est déplié. Le moyen de liaison (non représenté) peut être, par exemple, une rainure à même de plancher 24 ou des moyens de clippage.

En prolongement de l'assise 21 est fixé un bras 25 monté coulissant sur le pivot 17. Le bras 25 est sensiblement forme de V pour que lorsqu'il est en butée à une des extrémités du pivot 17, l'extrémité de l'assise 21 du siège 18 soit située encore plus latéralement. Cette configuration permet d'augmenter de façon simple l'amplitude des positions possibles de l'assise 21 par rapport à la longueur du pivot 17.

Les deux sièges 18 sont préférentiellement montés sur le même pivot 17. Ainsi lorsque les tapis 6 et 7 sont escamotés, les sièges 18 peuvent être dépliés soit sensiblement à l'affleurement l'un de l'autre, soit espacés l'un de l'autre. Cela permet, par exemple, de rajouter un troisième siège (non représenté) mobile sur le plancher 24 qui soit respectivement à côté ou entre les deux autres.

Ainsi, comme illustré dans l'exemple des figures 2a à 2d, l'escamotage chaque siège 18 est réalisé suivant les étapes successives dans lesquelles :
- l'assise 21 imprime une première rotation par son bras 25 par rapport au pivot 17 permettant d'accéder à la pièce tubulaire 23 et de la rétracter sous ladite assise.
- l'articulation 22 est activée pour replier l'ensemble dossier 19 - appui-tête 20 contre l'assise 21.
- la rotation de l'assise 21 est poursuivie pour, après un angle total sensiblement égal à 180 degrés, être à l'intérieur du cadre 4.

Le système de rangement 1 permet avantageusement de sélectivement pouvoir déployer ou rétracter les tapis 6 et 7 non seulement quand les sièges 18 sont escamotés dans le cadre 4 mais également quand ils sont dépliés dans l'habitacle du véhicule automobile. Ceci est rendu possible par le fait que le pivot 17 n'est pas compris dans le cadre 4 mais y est adjacent.

Par conséquent, le système de rangement selon l'invention permet de moduler plus facilement le volume intérieur utile d'un véhicule en permettant les configurations indépendantes suivantes :
- pas de siège supplémentaire, pas de rangement supplémentaire ;
- un siège supplémentaire avec au moins deux possibilités de positions, pas de rangement supplémentaire ;
- un siège supplémentaire avec au moins deux possibilités de positions, un rangement supplémentaire latéral ;
- deux sièges supplémentaires avec au moins trois possibilités de positions, pas de rangement supplémentaire ;
- deux sièges supplémentaires avec au moins trois possibilités de positions, un à deux rangements latéraux ;
- deux sièges supplémentaires avec au moins trois possibilités de positions, un grand rangement non compartimenté.

Bien entendu, la présente invention ne se limite pas à l'exemple illustré mais est susceptible de diverses variantes et modifications qui apparaîtront à l'homme de l'art. En particulier, les tapis 6 et 7 peuvent être déplacés par un moteur électrique. Il peut également n'y avoir qu'un seul tapis 6 se déployant de manière identique. De plus, les tapis peuvent se replier d'une manière différente comme par exemple en s'enroulant sur eux-même à proximité du cadre 4. Enfin, les articulations 22 peuvent comporter plus de deux positions pour permettre aux passagers de régler l'inclinaison des dossiers 19 des sièges 18.

## Revendications

1. Système de rangement (1) pour siège escamotable comprenant au moins un siège (18) monté sur pivot (17) dont le dossier (19) se replie sur l'assise (21) **caractérisé en ce que** le système de rangement au siège permette d'imprimer un mouvement de rotation jusque dans un évidement de rangement qu'il comporte, de plus, au moins un dispositif de recouvrement (3) dudit évidement de rangement permettant d'obtenir une surface sensiblement plane.

2. Système de rangement (1) selon la revendication 1, **caractérisé en ce que** ledit au moins un dispositif de recouvrement comporte des moyens coulissants (6, 7, 10, 11, 12, 13) qui s'escamotent pour sélectivement permettre la mise en place dudit au moins un siège.

3. Système de rangement (1) selon la revendication 2, **caractérisé en ce que** lesdits moyens coulissants comportent un tapis (6, 7) qui coulisse à l'intérieur de deux glissières (10, 11, 12, 13).

4. Système de rangement (1) selon la revendication 3, **caractérisé en ce que** ledit tapis est du type à lamelles.

5. Système de rangement (1) selon l'une des revendications 2 à 4, **caractérisé en ce qu**'il comporte un dispositif de recouvrement (3) pour chaque siège escamotable (18).

6. Système de rangement (1) selon la revendication 5, **caractérisé en ce qu**'il comporte deux sièges escamotables (18) et deux dispositifs de recouvrement (3) sensiblement juxtaposés permettant de sélectivement déplier un siège (18) ou les deux pour transformer respectivement un ou deux desdits évidements en volume supplémentaire de rangement.

7. Système de rangement (1) selon la revendication 6, **caractérisé en ce qu**'il comporte, de plus, une traverse (5) qui comprend une glissière (12, 13) de chacun desdits deux dispositifs de recouvrement permettant ainsi de les lier et de rigidifier ledit système de rangement afin qu'il supporte de plus lourdes charges.

8. Système de rangement (1) selon la revendication 7, **caractérisé en ce que** ladite traverse est amovible pour offrir, lorsque les moyens coulissants (6, 7, 10, 11, 12, 13) sont escamotés et les sièges dépliés (18), un volume supplémentaire de rangement unique.

9. Système de rangement (1) selon l'une des revendications précédentes, **caractérisé en ce que** chaque siège (18) peut glisser le long du pivot (17) pour permettre au moins deux positionnements différents dudit siège quand il est déplié.

10. Véhicule automobile **caractérisé en ce qu**'il comporte au moins un système de rangement (1) selon une des revendications précédentes.

## Claims

1. System (1) for storing a foldaway seat comprising at least one seat (18) mounted on a pivot (17), the seat back (19) of which folds over the seat base (21), **characterised in that** the storage system allows the seat to transmit a rotational movement as far as a storage recess, that it further comprises at least one device (3) for covering said storage recess making it possible to obtain a substantially plane surface.

2. Storage system (1) according to Claim 1, **characterised in that** said at least one covering device comprises sliding means (6, 7, 10, 11, 12, 13) that are retracted in order to selectively allow the positioning of said at least one seat.

3. Storage system (1) according to Claim 2, **characterised in that** said sliding means comprise a mat (6, 7) that slides within two sliders (10, 11, 12, 13).

4. Storage system (1) according to Claim 3, **characterised in that** said mat is of the type with strips.

5. Storage system (1) according to one of Claims 2 to 4, **characterised in that** it comprises a covering device (3) for each foldaway seat (18).

6. Storage system (1) according to Claim 5, **characterised in that** it comprises two foldaway seats (18) and two substantially juxtaposed covering devices (3) making it possible to selectively unfold one seat (18) or both in order to transform respectively one or two of said recesses into an additional storage space.

7. Storage system (1) according to Claim 6, **characterised in that** it further comprises a cross-piece (5) that comprises a slider (12, 13) for each of said two covering devices thus making it possible to link them and to rigidify said storage system so that it supports heavier loads.

8. Storage system (1) according to Claim 7, **characterised in that** said cross-piece is removable in order to offer an additional single storage space, when the sliding means (6, 7, 10, 11, 12, 13) are retracted and the seats (18) unfolded.

9. Storage system (1) according to one of the preceding claims, **characterised in that** each seat (18) can slide along the pivot (17) in order to allow at least two different positions of said seat when it is unfolded.

10. Motor vehicle **characterised in that** it comprises at least one storage system (1) according to one of the preceding claims.

## Patentansprüche

1. System zum Verstauen (1) für einen versenkbaren Sitz mit mindestens einem auf einer Drehachse (17) montierten Sitz (18), dessen Rückenlehne (19) auf das Sitzkissen (21) geklappt wird, **dadurch gekennzeichnet, dass** es den Sitz eine Drehbewegung bis in eine Vertiefung vollführen lässt, und dass es außerdem mindestens eine Vorrichtung (3) zum Bedecken der Vertiefung aufweist, die es ermöglicht, eine im Wesentlichen ebene Oberfläche zu erhalten.

2. System zum Verstauen (1) nach Anspruch 1, **dadurch gekennzeichnet, dass** die mindestens eine Vorrichtung zum Bedecken zusammenschiebbare Mittel (6, 7, 10, 11, 12, 13) aufweist, die sich einziehen lassen, um den mindestens einen Sitz aufzustellen.

3. System zum Verstauen (1) nach Anspruch 2, **dadurch gekennzeichnet, dass** die zusammenschiebbaren Mittel eine Matte (6, 7) aufweisen, die innerhalb von zwei Schienen (10, 11, 12, 13) gleitet.

4. System zum Verstauen (1) nach Anspruch 3, **dadurch gekennzeichnet, dass** die Matte Lamellen aufweist.

5. System zum Verstauen (1) nach einem der Ansprüche 2 bis 4, **dadurch gekennzeichnet, dass** es eine Vorrichtung (3) zum Bedecken für jeden versenkbaren Sitz (18) aufweist.

6. System zum Verstauen (1) nach Anspruch 5, **dadurch gekennzeichnet, dass** es zwei versenkbare Sitze (18) und zwei im Wesentlichen nebeneinander liegende Bedeckungsvorrichtungen (3) aufweist, die es ermöglichen, wahlweise einen Sitz (18) oder beide Sitze auszuklappen, um eine beziehungsweise zwei der Vertiefungen in zusätzlichen Stauraum zu verwandeln.

7. System zum Verstauen (1) nach Anspruch 6, **dadurch gekennzeichnet, dass** es außerdem einen Querträger (5) aufweist, der von jeder der beiden Bedeckungsvorrichtungen eine Schiene (12, 13) umfasst und auf diese Weise die Vorrichtungen verbinden und das Speichersystem versteifen kann, damit es größeren Lasten standhält.

8. System zum Verstauen (1) nach Anspruch 7, **dadurch gekennzeichnet, dass** sich der Querträger abnehmen lässt, um einen zusätzlichen Stauraum zu schaffen, wenn die zusammenschiebbaren Mittel (6, 7, 10, 11, 12, 13) eingezogen und die Sitze(18) ausgeklappt sind.

9. System zum Verstauen (1) nach einem der vorhergehenden Ansprüche, **dadurch gekennzeichnet, dass** jeder Sitz (18) an der Drehachse (17) entlang gleiten und mindestens zwei verschiedene Positionen einnehmen kann, wenn er ausgeklappt ist.

10. Kraftfahrzeug, **dadurch gekennzeichnet, dass** es mindestens ein System zum Verstauen (1) nach einem der vorhergehenden Ansprüche aufweist.
